# EUROPÄISCHE PATENTANMELDUNG

(11) **EP 2 230 478 A2**
(43) Veröffentlichungstag der Anmeldung: **22.09.2010**
(21) Anmeldenummer: 09174714.7
(22) Anmeldetag: 30.10.2009
(51) Int. Cl.: F28F 9/00

(54) **Halteteil zur Befestigung eines Wärmeübertragers**

(30) Priorität: 04.11.2008 EP 08291026
(71) Anmelder: Behr France Hambach S.A.R.L., 57910 Hambach (FR)
(72) Erfinder: Ammer, Jean-Philippe, 57520 Grosbliederstroff (FR)
(74) Vertreter: Grauel, Andreas

(57) **Zusammenfassung**

Bei einem Halteteil (1) zur Befestigung eines ersten Bauteils, insbesondere eines Wärmeübertragers oder eines Wärmeübertragermoduls, an einem zweiten Bauteil, insbesondere einer Karosserie eines Kraftfahrzeuges, umfassend wenigstens eine Auflagefläche für das erste Bauteil und wenigstens ein Mittel zur mittelbaren oder unmittelbaren Befestigung des Halteteils (1) an dem zweiten Bauteil soll auf eine einfache und zuverlässige Art und Weise eine Befestigung des ersten Bauteils oder des Wärmeübertragers ermöglicht werden. Ferner soll das Halteteil (1) in der Herstellung preiswert sein.

Diese Aufgabe wird dadurch gelöst, dass das Halteteil (1) wenigstens einen biegbaren Haltearm (15) zum form- und/oder kraftschlüssigen Befestigen des ersten Bauteils an dem Halteteil (1) aufweist, so dass mittels eines Biegens des wenigstens einen Haltearmes (15) das erste Bauteil an dem Halteteil (1) befestigbar ist.

## Beschreibung

Die Erfindung betrifft eine Halteteil gemäß dem Oberbegriff des Anspruches 1, ein System gemäß dem Oberbegriff des Anspruches 7 sowie ein Kraftfahrzeug und eine Kraftfahrzeugklimaanlage. Ferner betrifft die Erfindung ein Verfahren zur Befestigung zur Befestigung eines Wärmeübertragers oder eines Wärmeübertragermoduls an einer Karosserie eines Kraftfahrzeuges.

Kraftfahrzeugklimaanlagen werden in Kraftfahrzeugen eingesetzt, um die den Innenraum des Kraftfahrzeuges zuzuführenden Luft zu erwärmen und/oder zu kühlen. Die Kraftfahrzeugklimaanlage umfasst einen Kältemittelverdampfer, einen Kondensator und einen Verdichter. Die von dem Kältemittelverdampfer abgegebene Wärme wird von dem Kondensator als Wärmeübertrager an die Umgebungsluft abgegeben.

Der Kondensator als Wärmeübertrager, durch den das Kältemittel der Kraftfahrzeugklimaanlage strömt, muss an der Karosserie des Kraftfahrzeuges befestigt werden.

Die DE 297 07 571 U1 zeigt eine Anordnung zur Verbindung von zwei Wärmetauschern für Kraftfahrzeuge, beispielsweise einen Wasserkühler und einen Kondensator einer Klimaanlage, derart, dass die Wärmetauscher mit ihren Frontseiten mit einem minimalen Abstand vorzugsweise parallel zueinander und hintereinander angeordnet sowie mittels vorzugsweise aus Kunststoff hergestellter oberer und unterer Verbindungsteile miteinander verbunden sind, wobei die oberen Verbindungselemente Spangen sind, deren Aufnahmemaul an das obere Seitenteil des einen Wärmetauschers greift und deren rückwärtiges Ende eine Öffnung aufweist, mit der die Spangen am Aufnahmezapfen des anderen Wärmetauschers befestigt sind.

Die EP 1 666 736 A1 zeigt ein Halteclip, insbesondere für Kraftfahrzeugkarosserien. Das Halteclip weist einen Fußabschnitt und ein Kopfteil auf, wobei das Kopfteil einen Aufnahmeabschnitt für zumindest ein festzulegendes Bauteil aufweist und der Fußabschnitt in einer Endmontageposition in eine Öffnung eines Karosserieteils einsteckbar und daran befestigbar ist. Der am festzulegenden Bauteil vormontierte Halteclip weist ein Zugelement auf mittels dem der Halteclip von einer Vormontageposition über Zwischenstellungen in eine Endmontageposition verlagerbar ist.

Die US 3 938 587 zeigt ein Montageteil zur Befestigung eines Ölkühlers an einem Kondensator einer Kraftfahrzeugklimaanlage. Das Befestigungsteil besteht aus einem scheibenförmigen Widerlagerelement, einem stabförmigen Spannungselement und einem scheibenförmigen Auflageelement. Das Widerlagerelement liegt auf einer Seite des Kondensators auf und das stabförmige Spannungselement dringt durch den Kondensator und den Ölkühler durch. Am Ende des stabförmigen Spannungselementes wird das Auflageelement dahingehend unter Spannung verrastet, dass der Ölkühler unter Vorspannung auf den Kondensator gedrückt wird. Zwischen dem Ölkühler und dem Kondensator sind dabei Kissen angeordnet, so dass kein unmittelbarer Kontakt zwischen dem Ölkühler und dem Kondensator besteht.

In Kraftfahrzeugen müssen Wärmeübertrager, z. B. ein Kondensator einer Kraftfahrzeugklimaanlage, ein Kühlflüssigkeitskühler für die Kühlflüssigkeit eines Verbrennungsmotors oder ein Ölkühler, an der Karosserie befestigt werden. Es können dabei auch mehrere Wärmeübertrager, z. B. der Kondensator und der Kühlflüssigkeitskühler, zu einem Wärmeübertragermodul zusammengefasst sein, d. h. der Kondensator und der Kühlflüssigkeitskühler sind miteinander verbunden. Auch dieses Wärmeübertragermodul ist an der Karosserie des Kraftfahrzeuges zu befestigen. Hierzu werden im Allgemeinen Halteteile aus Metall, insbesondere Aluminium, eingesetzt. Das Halteteil wird dabei an dem Wärmeübertrager oder dem Wärmeübertragermodul befestigt, z. B. durch Löten. Anschließend wird das Halteteil an der Karosserie, beispielsweise mittels einer Schraub- oder Steckverbindung, befestigt. Hierzu weist das Halteteil beispielsweise eine Lasche mit einer Ausnehmung auf. Mittels der Ausnehmung wird das Halteteil anschließend an der Karosserie fixiert In nachteiliger Weise sind die Halteteile aus Aluminium in der Herstellung teuer und das Befestigen des Halteteils an dem Wärmeübertrager oder dem Wärmeübertragermodul mittels Anlöten kann eine fehlerhafte Befestigung des Halteteils an dem Wärmeübertrager oder dem Wärmeübertragermodul verursachen.

Die Aufgabe der vorliegenden Erfindung besteht deshalb darin, ein Halteteil, ein System zur Befestigung eines ersten Bauteils, eine Kraftfahrzeugklimaanlage und eine Kraftfahrzeug sowie ein Verfahren zur Befestigung eines Wärmeübertragers zur Verfügung zu stellen, das auf eine einfache und zuverlässige Art und Weise eine Befestigung des ersten Bauteils oder eines Wärmeübertragers ermöglicht. Ferner sollen das Halteteil, das System zur Befestigung des ersten Bauteils, die Kraftfahrzeugklimaanlage und das Kraftfahrzeug in der Herstellung preiswert sein.

Diese Aufgabe wird gelöst mit einem Halteteil zur Befestigung eines ersten Bauteils, insbesondere eines Wärmeübertragers oder eines Wärmeübertragermoduls, an einem zweiten Bauteil, insbesondere einer Karosserie eines Kraftfahrzeuges, umfassend wenigstens eine Auflagefläche für das erste Bauteil und wenigstens ein Mittel zur mittelbaren oder unmittelbaren Befestigung des Halteteils an dem zweiten Bauteil, wobei das Halteteil wenigstens einen biegbaren Haltearm zum form- und/oder kraftschlüssigen Befestigen des ersten Bauteils an dem Halteteil aufweist, so dass mittels eines Biegens des wenigstens einen Haltearmes das erste Bauteil an dem Halteteil befestigbar ist. Der biegbare Haltearm des Halteteils kann ein Sammelrohr eines Wärmeübertragers, insbesondere eines Kondensators, umgreifen und dadurch den Wärmeübertrager mit dem Halteteil verbinden. Als Karosserie können auch an der Karosserie befestigte Teile, insbesondere zur Befestigung des Wärmeübertragers oder des Wärmeübertragermoduls, aufgefasst werden.

Insbesondere ist der wenigstens eine biegbare Haltearm um wenigstens 90° biegbar und/oder das erste Bauteil oder ein Teil des ersten Bauteils von dem biegbaren Haltearm umgreifbar.

In einer weiteren Ausgestaltung ist der wenigstens eine biegbare Haltearm in einem ersten Abschnitt, insbesondere ersten Endabschnitt, an dem übrigen Halteteil fixierbar. Der erste Abschnitt des biegbaren Haltearmes, mittels dem der Haltearm an dem übrigen Halteteil fixiert wird, kann dabei unterschiedliche Positionen bzw. Abschnitte des Haltearmes umfassen. Dadurch ist es möglich, mit dem Haltearm Gegenstände von unterschiedlicher Größe zu umgreifen und zu befestigen, so dass auch verschiedene Wärmeübertrager mit einem unterschiedlichen Durchmesser des Sammelrohres mit dem Halteteil befestigt werden können.

In einer ergänzenden Ausführungsform ist der erste Abschnitt mittels einer kraft- und/oder formschlüssigen Verbindung, insbesondere einer Rastverbindung, an dem übrigen Halteteil fixierbar.

Vorzugsweise ist von dem wenigstens einen Mittel zur Befestigung des Halteteils an dem zweiten Bauteil eine kraft- und/oder formschlüssige Verbindung, insbesondere eine Rastverbindung, zu dem zweiten Bauteil herstellbar.

In einer Variante umfasst das wenigstens eine Mittel wenigstens einen Rastarm mit einer Rastnase.

Erfindungsgemäßes System zur Befestigung eines ersten Bauteils, insbesondere eines Wärmeübertragers oder eines Wärmeübertragermoduls, an einem zweiten Bauteil, insbesondere einer Karosserie eines Kraftfahrzeuges, mit einem Halteteil und einem Befestigungsteil und das Halteteil mittelbar mit dem Befestigungsteil an dem zweiten Bauteil befestigbar ist, wobei das Halteteil gemäß einem in dieser Anmeldung beschriebenen Halteteil ausgebildet ist.

Zweckmäßig weist das Befestigungsteil wenigstens eine Einrichtung zur Befestigung des Halteteils an dem Befestigungsteil auf und die wenigstens eine Einrichtung ist komplementär zu dem wenigstens einen Mittel zur Befestigung des Halteteils ausgebildet.

In einer weiteren Ausführungsform ist mittels der wenigstens einen Einrichtung und dem wenigstens einen Mittel eine form- und/oder kraftschlüssige Verbindung, insbesondere eine Rastverbindung, zwischen dem Halteteil und dem Befestigungsteil herstellbar.

Insbesondere sind die wenigstens eine Einrichtung und das wenigstens eine Mittel als eine Steck- und Gegensteckverbindung ausgebildet.

In einer weiteren Ausgestaltung besteht das Halteteil und/oder das Befestigungsteil wenigstens teilweise aus Kunststoff, insbesondere thermoplastischen Kunststoff. Ein Halteteil und/oder ein Befestigungsteil aus Kunststoff kann besonders einfach und preiswert hergestellt werden.

Ein erfindungsgemäßes Kraftfahrzeug oder eine erfindungsgemäße Kraftfahrzeugklimaanlage umfasst ein in dieser Anmeldung beschriebenes Halteteil und/oder ein in dieser Anmeldung beschriebenes System.

Ein erfindungsgemäßes Verfahren zur Befestigung eines Wärmeübertragers oder eines Wärmeübertragermoduls an einer Karosserie eines Kraftfahrzeuges umfasst die Schritte: Befestigen eines Halteteils an dem Wärmeübertrager oder dem Wärmeübertragermodul und Befestigen des Halteteils an der Karosserie, wobei das Halteteil mittelbar mit einem Befestigungsteil an der Karosserie befestigt wird und das Befestigungsteil an der Karosserie befestigt wird.

In einer ergänzenden Variante wird wenigstens ein biegbarer Haltearm des Halteteils um den Wärmeübertrager oder das Wärmeübertragermodul oder um einen Teil des Wärmeübertragers oder des Wärmeübertragermoduls, z. B. ein Rohr, insbesondere ein Sammelrohr, gebogen und der wenigstens eine Haltearm wird an dem übrigen Halteteil fixiert zum Befestigen des Wärmeübertragers oder des Wärmeübertragermoduls an dem Halteteil.

In einer weitere Variante wird das Halteteil ausschließlich mittelbar mit dem Befestigungsteil an der Karosserie befestigt. Insbesondere weist das Halteteil somit keinen unmittelbaren Kontakt zu der Karosserie auf.

In einer weiteren Ausgestaltung ist die wenigstens eine Auflagefläche für das erste Bauteil gekrümmt, insbesondere im Querschnitt im Wesentlichen kreisförmig, zur Auflage des ersten Bauteils oder des Teils des ersten Bauteils, z. B. das Rohr, insbesondere Sammelrohr, des Wärmeübertragers.

In einer Variante wird der Wärmeübertrager oder das Wärmeübertragermodul oder ein Teil des Wärmeübertragers oder des Wärmeübertragermoduls auf eine Auflagefläche des Halteteils aufgelegt.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Wärmeübertragermoduls,
- Fig. 2: eine perspektivische Ansicht eines Befestigungsteils,
- Fig. 3: eine perspektivische Ansicht eines Halteteils,
- Fig. 4: eine perspektivische Ansicht des Halte- und Befestigungsteils gemäß Fig. 1 und 2,
- Fig. 5: einen Querschnitt des Halteteils, eines Rohres und zweier Führungsteile in einer ersten Stellung eines Befestigungsvorganges,
- Fig. 6: einen Querschnitt des Halteteils, des Rohres und zweier Führungsteile in einer zweiten Stellung des Befestigungsvorganges,
- Fig. 7: einen Querschnitt des Halteteils, des Rohres und zweier Führungsteile in einer dritten Stellung des Befestigungsvorganges,
- Fig. 8: einen Querschnitt des Halteteils, des Rohres und zweier Führungsteile in einer vierten Stellung des Befestigungsvorganges,
- Fig. 9: einen Querschnitt des Halteteils, des Rohres und zweier Führungsteile in einer fünften Stellung des Befestigungsvorganges,
- Fig. 10: einen Querschnitt des Halteteils, des Rohres und zweier Führungsteile in einer sechsten Stellung des Befestigungsvorgan- ges,
- Fig. 11: einen Querschnitt des Halte- und Befestigungsteils, des Rohres und zweier Führungsteile in einer siebten Stellung des Befestigungsvor- ganges und
- Fig. 12: einen Querschnitt des Halte- und Befestigungsteils, des Rohres und zweier Führungsteile in einer achten Stellung des Befestigungsvor- ganges.

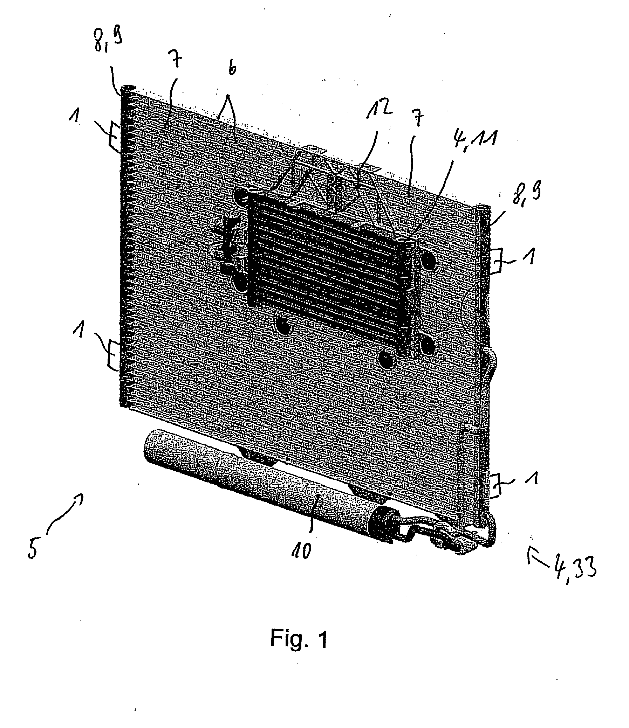

In Fig. 1 ist ein als Kondensator 33 ausgebildeter Wärmeübertrager 4 einer nicht dargestellten Kraftfahrzeugklimaanlage dargestellt. Die Kraftfahrzeugklimaanlage umfasst ferner einen Kältemittelverdampfer zum Kühlen der Luft, ein Gebläse zum Umwälzen der Luft, Leitungen für einen Kältemittelkreislauf und einen Verdichter (nicht dargestellt). Die nicht dargestellte Kraftfahrzeugklimaanlage dient dazu, die dem Innenraum des Kraftfahrzeuges zuzuführende Luft zu kühlen und/oder zu erwärmen.

An dem in Fig. 1 dargestellten Kondensator 33 ist mittels eines Befestigungsrahmens 12 ein als Ölkühler 11 ausgebildeter Wärmeübertrager 4 befestigt. Der Kondensator 33 umfasst zwei als Sammelrohre 9 ausgebildete Rohre 8 auf der linken und rechten Seite des Kondensators 33. Zwischen den beiden Sammelrohren 9 sind Flachrohre 6 angeordnet. Die Flachrohre 6 münden in die Sammelrohre 9. Zwischen den Flachrohren 9 sind Kühlrippen 7 vorhanden. In einem Sammelbehälter 10 des Kondensators 33 ist hygroskopisches Material zur Trocknung des durch den Kondensator 33 strömenden Kältemittels der Kraftfahrzeugklimaanlage vorhanden.

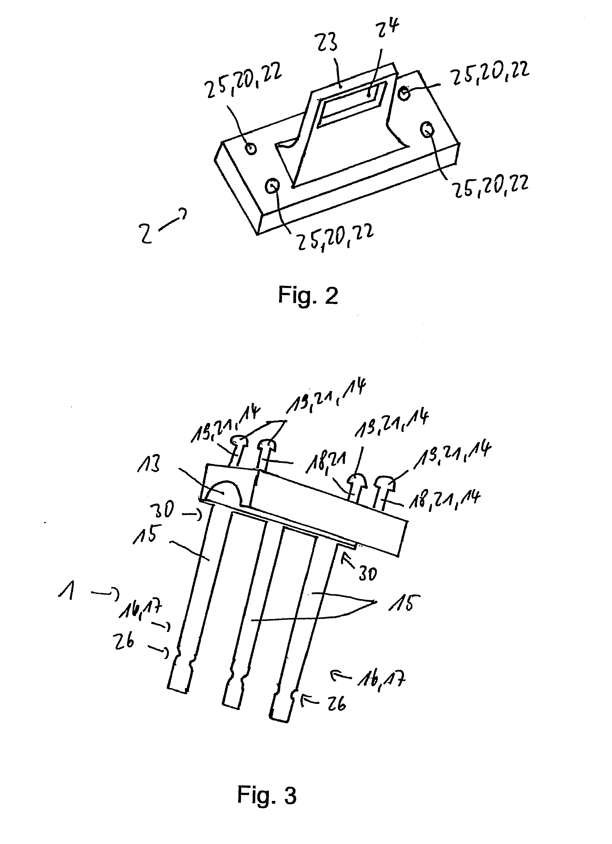

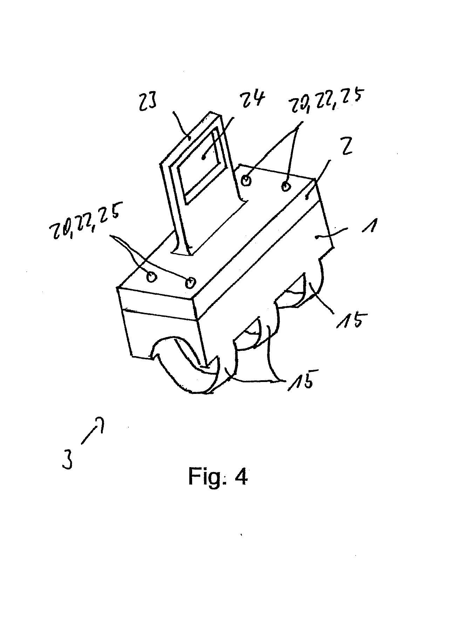

Der Kondensator 33 wird mittel eines Halteteiles 1 (Fig. 1 und 3) und eines Befestigungsteiles 2 (Fig. 2) an einer nicht dargestellten Karosserie des Kraftfahrzeuges befestigt. Das Halteteil 1 und das Befestigungsteil 2 bilden ein System 3 (Fig. 4) zur Befestigung des Kondensators 33 an der Karosserie des Kraftfahrzeuges. Dabei wird der in Fig. 1 dargestellten Kondensator 33 mit vier Halteteilen 1 an den Sammelrohren 9 befestigt.

In Fig. 1 sind zwei Wärmeübertrager 4, d. h. der Kondensator 33 und der Ölkühler 11, abgebildet, so dass diese aufgrund der Verbindung mittels des Befestigungsrahmes 12 ein Wärmeübertragermodul 5 bilden.

Das Halteteil 1 und das Befestigungsteil 2 bestehen aus thermoplastischem Kunststoff. Das Halteteil 1 umfasst drei biegbare Haltearme 15, die an einem zweiten Abschnitt 30 des Haltearmes 15 unlösbar mit dem übrigen Halteteil 1 verbunden sind. Bei der Herstellung des Halteteiles 1 mittels Spritzgießen aus thermoplastischem Kunststoff werden die Haltearme 15 einteilig mit dem übrigen Halteteil 1 hergestellt, so dass die Haltearme 15 an dem zweiten Abschnitt 30 stoffschlüssig mit dem übrigen Halteteil 1 verbunden sind. Die Haltearme 15 weisen im Bereich eines ersten Abschnittes 16 der Haltearme 15 Einkerbungen 26 auf. Die ersten Abschnitte 16 der Haltearme 15 sind zugleich Endabschnitte der Haltearme 17, da diese im Bereich eines Endes der Haltearme 5 ausgebildet sind. Das Halteteil 1 ist mit einer im Querschnitt gekrümmten Auflagefläche 13 versehen (Fig. 3). Ferner umfasst das Halteteil 1 Mittel 14 zur mittelbaren Befestigung des Halteteils 1 an der Karosserie des Kraftfahrzeuges. Die Mittel 14 bestehen dabei aus vier Rastarmen 18 an denen im Endbereich Rastnasen 19 ausgebildet sind.

Das Befestigungsteil 2 ist mit Einrichtungen 20 zur Befestigung des Halteteils 1 an dem Befestigungsteil 2 versehen. Die Einrichtungen 20 sind dabei als vier Rastbohrungen 25 ausgebildet (Fig. 2, 4, 11 und 12). An dem Befestigungsteil 2 ist ferner eine Lasche 23 einer rechteckförmigen Ausnehmung 24 ausgebildet. Die Lasche 23 mit der Ausnehmung 24 dient dazu, dass Befestigungsteil 2 an der Karosserie des Kraftfahrzeuges zu befestigen. Beispielsweise wird hierzu eine an dem Kraftfahrzeug ausgebildete Befestigungsöse in die Ausnehmung 24 der Lasche eingeführt und mit dieser formschlüssig verbunden (nicht dargestellt).

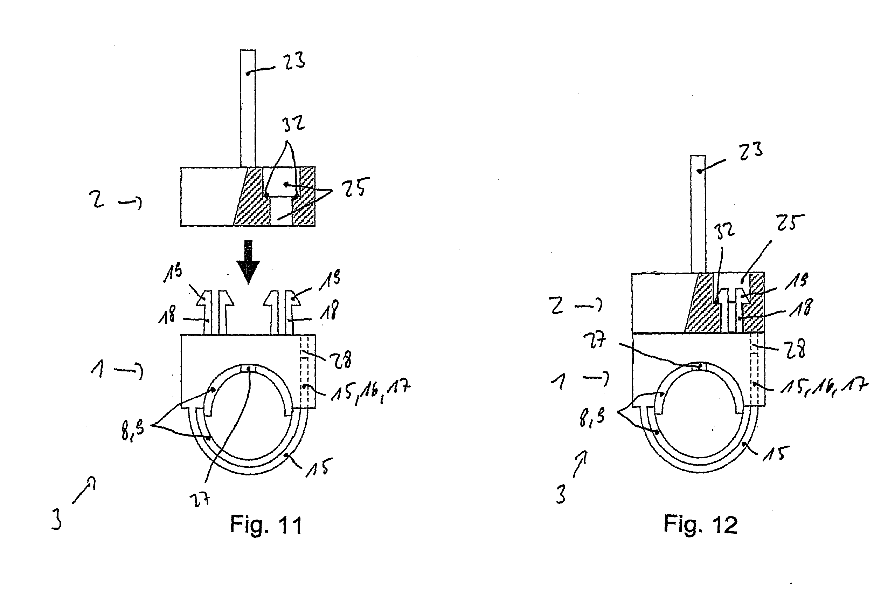

Das Halteteil 1 kann mittels der Einrichtungen 20 an dem Befestigungsteil 2 und der Mittel 14 an dem Halteteil 1 mit dem Befestigungsteil 2 formschlüssig mittels einer Rastverbindung verbunden werden (Fig. 4 und 12). Hierzu sind die Rastarme 18 mit den Rastnasen 19 in die Rastbohrungen 25 des Befestigungsteils 2 einzuführen. Die Rastbohrungen 25 weisen dabei Raststufen 32 (Fig. 11 und 12) auf, so dass die Rastnasen 19 der Rastarme 18 die Raststufen 32 hintergreifen können und dadurch eine formschlüssige Verbindung als Rastverbindung zwischen dem Halteteil 1 und dem Befestigungsteil 2 hergestellt werden kann. Die Rastarme 18 mit den Rastnasen 19 stellen somit eine Steckverbindung 21 und die Rastbohrungen 25 eine komplementär dazu ausgebildete Gegensteckverbindung 22 dar.

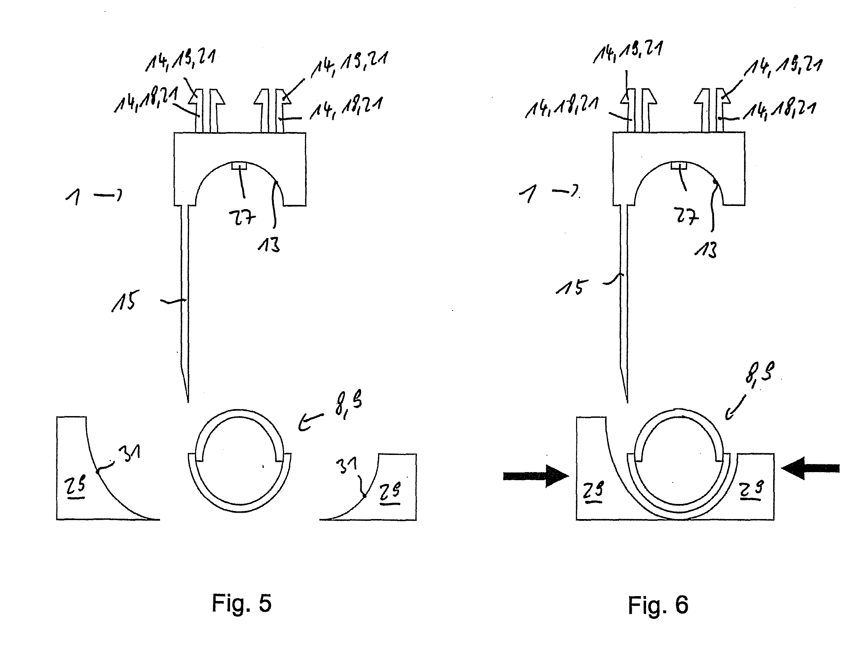

In den Fig. 5 bis 12 sind die verschiedenen Stellungen des Halteteiles 1 und gegebenenfalls zusätzlich des Befestigungsteiles 2 während des Befestigens des Kondensators 33 an der Karosserie des Kraftfahrzeuges dargestellt.

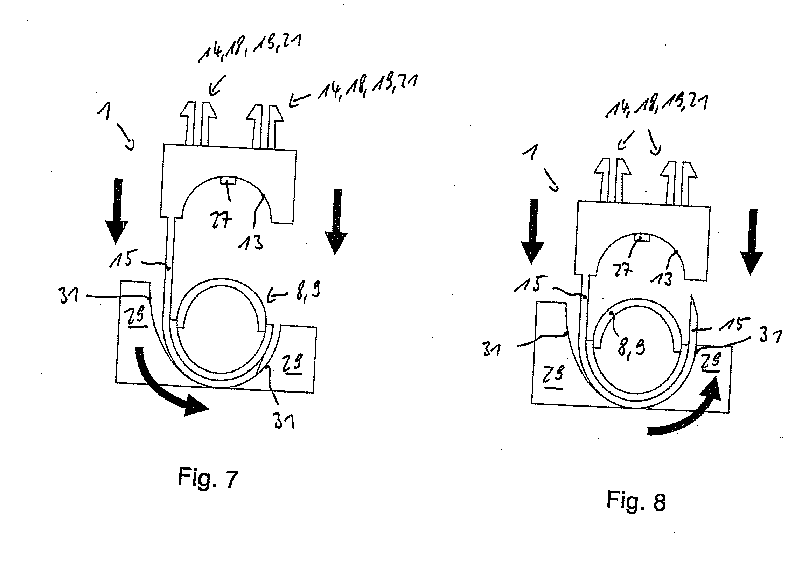

In Fig. 5 sind das Halteteil 1, das Sammelrohr 9 des Kondensators 33 gemäß Fig. 1 und Führungsteile 29 mit gekrümmten Führungsflächen 31 dargestellt. Die Führungsflächen 31 der Führungsteile 29 dienen dazu, die Haltearme 15 dahingehend zu führen, dass die Haltearme 15 das Sammelrohr 9 des Kondensators 33 umgreifen. Hierzu werden die beiden Führungsteile 29 in die in Fig. 6 dargestellte Position an dem Kondensator 33 gebracht. Der Kondensator 33 ist dabei dahingehend im Bereich des Sammelrohres 9 ausgebildet, dass die Haltearme 15 das Sammelrohr 9 umgreifen können. Zum Umgreifen des Sammelrohres 9 mit dem biegbaren Haltearm 15 wird das Halteteil 1 von der in Fig. 5 und 6 dargestellten Position langsam zu der in Fig. 7 und 8 dargestellten Position bewegt. Die Bewegung des Halteteiles 1 erfolgt dabei senkrecht zu einer Längsachse des Sammelrohres 9. Aufgrund der von den beiden Führungsteile 9 zur Verfügung gestellten Führungsfläche 31 werden dabei die biegbare Haltearme 15 um 180° während der Bewegung des Halteteiles 1 gebogen, so dass die biegbaren Haltearme 15 das Sammelrohr 9 umgreifen (Fig. 8).

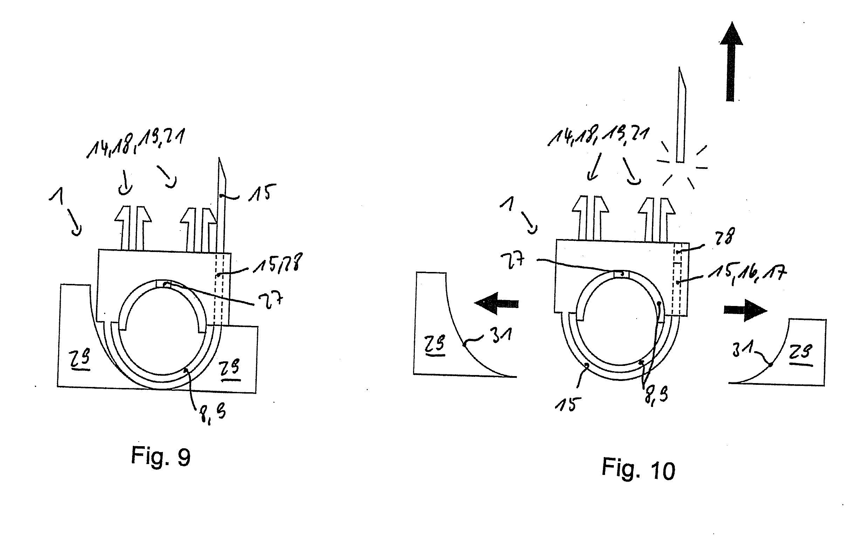

Das Halteteil 1 ist mit drei Fixierungskanälen 28 zur Aufnahme der drei biegbaren Haltearme 15 versehen (Fig. 9 bis 12). Die Krümmung der Auflagefläche 13 entspricht ungefähr der Krümmung des Sammelrohres 9. Ferner ist an der Auflagefläche 13 des Halteteiles 1 ein Vorsprung 27 ausgebildet. Komplementär zu dem Vorsprung 27 ist an dem Sammelrohr 9 an der Oberfläche eine Ausnehmung vorhanden. Die Ausnehmung ist dabei in den Fig. 5 bis 12 nicht dargestellt. Bei einer weiteren Bewegung des Halteteils 1 senkrecht zu der Längsachse des Sammelrohres 9 in Richtung zu dem Sammelrohr 9 werden die biegbare Haltearme 15 in die Fixierungskanäle 28 des Halteteils 1 eingeschoben, so dass das Ende der Haltearme 15 an dem zu dem Sammelrohr 9 abgewandten Ende der Fixierungskanäle 28 heraussteht (Fig. 9). Der Vorsprung 27 des Halteteiles 1 an der gekrümmten Auflagefläche 13 dringt dabei in die nicht dargestellte Ausnehmung des Sammelrohres 9 ein. Der Vorsprung 27 des Halteteiles 1 bewirkt dadurch eine formschlüssige Verbindung zwischen dem Halteteil 1, d. h. der Auflagefläche 13 des Halteteiles 1 und den gebogenen Haltearmen 15, so dass ein Verdrehen des Sammelrohres 9 relativ zu dem Halteteil 1 bzw. umgekehrt nicht möglich ist. Der erste Abschnitt 16 des Haltearmes 15 als Endabschnitt 17 des Haltearmes 15 ist dabei mittels einer nicht dargestellten Rastverbindung in den Fixierungskanälen 28 fixiert (Fig. 9 bis 12). Nach der Fixierung der Haltearme 15 in den Fixierungskanälen 28 werden die Haltearme 15 im Bereich der Einkerbungen 26 durchtrennt, so dass die Haltearme 15 nicht mehr zu dem Sammelrohr 9 abgewandten Ende des Fixierungskanals 28 herausstehen (Fig. 10). Ferner können die beiden Führungsteile 29 von dem Sammelrohr 9 entfernt werden, weil eine weitere Führung der biegbaren Haltearme 15 nicht mehr erforderlich ist (Fig. 10).

Zur Befestigung des Kondensators 33 an der Karosserie des Kraftfahrzeuges wird das an dem Sammelrohr 9 befestigte Halteteil 1 mittelbar mit dem Befestigungsteil 2 an der Karosserie des Kraftfahrzeuges befestigt. Die Karosserie des Kraftfahrzeuges ist dabei in den Fig. 11 und 12 nicht dargestellt. Das Befestigungsteil 2 ist dabei mittels der Lasche 23 und der Ausnehmung 24 (Fig. 2, 3, 11 und 12) an der nicht dargestellten Karosserie befestigt. Zur Befestigung des Halteteiles 1 an dem Befestigungsteil 2 werden die Rastarme 18 mit den Rastnasen 19 als Steckverbindungen 21 in die Rastbohrungen 25 des Halteteiles 2 als Gegensteckverbindung 22 eingeführt. Die Rastarme 18 sind dabei zweiteilig ausgebildet und weisen an der Spitze eine konische Form auf. Aufgrund der konischen Form der Spitze des Rastarmes 18 werden beim Einführen des Rastarmes 18 in die Rastbohrung 15 die beiden Teile des Rastarmes 18 zusammengedrückt. Beim weiteren Einführen der Rastarme 18 in die Rastbohrungen 25 mit zwei unterschiedlichen Durchmessern, so dass sich die Raststufe 32 in der Rastbohrung 25 ausbildet, bewegen sich die beiden Rastarme 18 elastisch wieder in die ursprüngliche Form zurück, wenn die Rastnase 19 den Abschnitt der Rastbohrung 25 mit dem größeren Durchmesser erreicht hat. Dadurch können die Rastnasen 19 die Raststufen 32 hinter greifen, so dass sich eine formschlüssige Verbindung als Rastverbindung zwischen den Rastnasen 19 und der Raststufe 32 in der Rastbohrung 25 ergibt. Das Halteteil 1 ist damit an dem Befestigungsteil 2 befestigt (Fig. 12). Die zeitliche Abfolge des Befestigens des Halteteils 1 an dem Sammelrohr 9, des Befestigens des Befestigungsteiles 2 an der Karosserie und des Befestigens des Befestigungsteiles 2 an dem Halteteil 1 ist dabei beliebig. Beispielsweise kann zuerst das Befestigungsteil 2 an der Karosserie, dann das Halteteil 1 an dem Sammelrohr 9 und anschließend das Befestigungsteil 2 an dem Halteteil 1 befestigt werden. Ferner ist es auch möglich, zuerst das Halteteil 1 an dem Sammelrohr 9, anschließend das Befestigungsteil 2 an dem Halteteil 1 und dann das Befestigungsteil 2 an der Karosserie zu befestigen.

Insgesamt betrachtet sind mit dem erfindungsgemäßen Halteteil 1 und dem erfindungsgemäßen System 3, beispielsweise zur Befestigung eines Wärmeübertragers 4 oder eines Wärmeübertragermoduls 5 an einer Karosserie eines Kraftfahrzeuges, erhebliche Vorteile verbunden. Anstelle aufwendiger und teuerer Halteteile aus Metall, insbesondere Aluminium, können Halte- und Befestigungsteile 1, 2 aus preiswertem Kunststoff verwendet werden. Das Befestigen des Halteteils 1 an dem Sammelrohr 9 des Kondensators 33 mittels des biegbaren Haltearmes 15 ermöglicht es auch ferner in vorteilhafter Weise, Sammelrohre 9 mit einem unterschiedlichen Durchmesser mit einem identischen Halteteil 1 zu befestigen. Dadurch können auch für unterschiedliche Typen von Wärmeübertragern 4 identische Halteteile 1 verwendet werden, so dass dadurch die Kosten zusätzlich gesenkt werden.

### Bezugszeichenliste

- 1: Halteteil
- 2: Befestigungsteil
- 3: System
- 4: Wärmeübertrager
- 5: Wärmeübertragermodul
- 6: Flachrohr
- 7: Kühlrippe
- 8: Rohr
- 9: Sammelrohr
- 10: Sammelbehälter
- 11: Ölkühler
- 12: Befestigungsrahmen für Ölkühler
- 13: Auflagefläche
- 14: Mittel zur Befestigung des Halteteils
- 15: Biegbarer Haltearm
- 16: Erster Abschnitt des Haltearmes
- 17: Endabschnitt des Haltearmes
- 18: Rastarm
- 19: Rastnase
- 20: Einrichtung an dem Befestigungsteil zur Befestigung des Halteteils an dem Befestigungsteil
- 21: Steckverbindung
- 22: Gegensteckverbindung
- 23: Lasche zur Befestigung des Befestigungsteils an einer Karosserie
- 24: Ausnehmung in der Lasche
- 25: Rastbohrung in dem Befestigungsteil
- 26: Einkerbung in Haltearm
- 27: Vorsprung an Auflagefläche des Halteteils
- 28: Fixierungskanal in Halteteil für Haltearm
- 29: Führungsteil
- 30: Zweiter Abschnitt des Haltearmes
- 31: Gekrümmte Führungsfläche
- 32: Raststufe in Rastbohrung des Befestigungsteils
- 33: Kondensator

## Patentansprüche

1. Halteteil (1) zur Befestigung eines ersten Bauteils, insbesondere eines Wärmeübertragers (4) oder eines Wärmeübertragermoduls (5), an einem zweiten Bauteil, insbesondere einer Karosserie eines Kraftfahrzeuges, umfassend
- wenigstens eine Auflagefläche (13) für das erste Bauteil und
- wenigstens ein Mittel (14) zur mittelbaren oder unmittelbaren Befestigung des Halteteils (1) an dem zweiten Bauteil,
**dadurch gekennzeichnet, dass**
das Halteteil (1) wenigstens einen biegbaren Haltearm (15) zum form- und/oder kraftschlüssigen Befestigen des ersten Bauteils an dem Halteteil (1) aufweist, so dass mittels eines Biegens des wenigstens einen Haltearmes (15) das erste Bauteil an dem Halteteil (1) befestigbar ist.

2. Halteteil nach Anspruch 1, **dadurch gekennzeichnet, dass** der wenigstens eine biegbare Haltearm (15) um wenigstens 90° biegbar ist und/oder das erste Bauteil oder ein Teil des ersten Bauteils von dem biegbaren Haltearm (15) umgreifbar ist.

3. Halteteil nach Anspruch 1 oder 2, **dadurch gekennzeichnet, dass** der wenigstens eine biegbare Haltearm (15) in einem ersten Abschnitt (16), insbesondere ersten Endabschnitt (17), an dem übrigen Halteteil (1) fixierbar ist.

4. Halteteil nach Anspruch 3, **dadurch gekennzeichnet, dass** der erste Abschnitt (16) mittels einer kraft- und/oder formschlüssigen Verbindung, insbesondere einer Rastverbindung, an dem übrigen Halteteil (1) fixierbar ist.

5. Halteteil nach einem oder mehreren der vorhergehenden Ansprüchen, **dadurch gekennzeichnet, dass** von dem wenigstens einen Mittel (14) zur Befestigung des Halteteils (1) an dem zweiten Bauteil eine kraft- und/oder formschlüssige Verbindung, insbesondere eine Rastverbindung, zu dem zweiten Bauteil herstellbar ist.

6. Halteteil nach Anspruch 5, **dadurch gekennzeichnet, dass** das wenigstens eine Mittel (14) wenigstens einen Rastarm (18) mit einer Rastnase (19) umfasst.

7. System (3) zur Befestigung eines ersten Bauteils, insbesondere eines Wärmeübertragers (4) oder eines Wärmeübertragermoduls (5), an einem zweiten Bauteil, insbesondere einer Karosserie eines Kraftfahrzeuges, mit einem Halteteil (1) und einem Befestigungsteil (2) und das Halteteil (1) mittelbar mit dem Befestigungsteil (2) an dem zweiten Bauteil befestigbar ist, **dadurch gekennzeichnet, dass** das Halteteil (1) gemäß einem oder mehreren der vorhergehenden Ansprüche ausgebildet ist.

8. System nach Anspruch 7, **dadurch gekennzeichnet, dass** das Befestigungsteil (2) wenigstens eine Einrichtung (20) zur Befestigung des Halteteils (1) an dem Befestigungsteil (2) aufweist und die wenigstens eine Einrichtung (20) komplementär zu dem wenigstens einen Mittel (14) zur Befestigung des Halteteils (1) ausgebildet ist.

9. System nach Anspruch 8, **dadurch gekennzeichnet, dass** mittels der wenigstens einen Einrichtung (20) und dem wenigstens einen Mittel (14) eine form- und/oder kraftschlüssige Verbindung, insbesondere eine Rastverbindung, zwischen dem Halteteil (1) und dem Befestigungsteil (2) herstellbar ist.

10. System nach Anspruch 8 oder 9, **dadurch gekennzeichnet, dass** die wenigstens eine Einrichtung (20) und das wenigstens eine Mittel (14) als eine Steck- und Gegensteckverbindung (21, 22) ausgebildet sind.

11. System nach einem oder mehreren der Ansprüche 7 bis 10, **dadurch gekennzeichnet, dass** das Halteteil (1) und/oder das Befestigungsteil (2) wenigstens teilweise aus Kunststoff, insbesondere thermoplastischen Kunststoff, besteht.

12. Kraftfahrzeug oder Kraftfahrzeugklimaanlage, **dadurch gekennzeichnet, dass** das Kraftfahrzeug oder die Kraftfahrzeugklimaanlage eine Halteteil (1) gemäß einem oder mehreren der Ansprüche 1 bis 6 und/oder ein System (3) gemäß einem oder mehreren der Ansprüche 7 bis 11 umfasst.

13. Verfahren zur Befestigung eines Wärmeübertragers (4) oder eines Wärmeübertragermoduls (5) an einer Karosserie eines Kraftfahrzeuges mit den Schritten:
- Befestigen eines Halteteils (1) an dem Wärmeübertrager (4) oder dem Wärmeübertragermodul (5) und
- Befestigen des Halteteils (1) an der Karosserie,
**dadurch gekennzeichnet, dass**
das Halteteil (1) mittelbar mit einem Befestigungsteil (2) an der Karosserie befestigt wird und das Befestigungsteil (2) an der Karosserie befestigt wird.

14. Verfahren nach Anspruch 13, **dadurch gekennzeichnet, dass** wenigstens ein biegbarer Haltearm (15) des Halteteils (1) um den Wärmeübertrager (4) oder das Wärmeübertragermodul (5) oder um einen Teil des Wärmeübertragers (4) oder des Wärmeübertragermoduls (5), z. B. ein Rohr (8), insbesondere ein Sammelrohr (10), gebogen wird und der wenigstens eine Haltearm (15) an dem übrigen Halteteil (1) fixiert wird zum Befestigen des Wärmeübertragers (4) oder des Wärmeübertragermoduls (5) an dem Halteteil (1).

15. Verfahren nach Anspruch 13 oder 14, **dadurch gekennzeichnet, dass** das Halteteil (1) ausschließlich mittelbar mit dem Befestigungsteil (2) an der Karosserie befestigt wird.
